Europäisches Patentamt

European Patent Office

Office européen des brevets

(19)

(11) Publication number: **0 240 800**

**A2**

(12)

# EUROPEAN PATENT APPLICATION

(21) Application number: **87104043.2**

(22) Date of filing: **19.03.87**

(51) Int. Cl.³: **G 11 B 7/24**

(30) Priority: **19.03.86 JP 59441/86**

(43) Date of publication of application:
**14.10.87 Bulletin 87/42**

(84) Designated Contracting States:
**DE FR GB**

(71) Applicant: **Hitachi Maxell Ltd.**
**No 1-1-88, Ushitora Ibaraki-shi**
**Osaka-fu(JP)**

(72) Inventor: **Gotoh, Akira**
**7-30-204, Togashira, 7-chome**
**Toride-shi Ibaragi-ken(JP)**

(74) Representative: **von Kreisler, Alek, Dipl.-Chem. et al,**
**Deichmannhaus am Hauptbahnhof**
**D-5000 Köln 1(DE)**

(54) Optical recording disc.

(57) In an optical recording disc comprising a triggering layer formed on a disc substrate through an adiabatic layer and a recording layer formed on the triggering layer, the triggering layer is made of material to be meltable or decomposable at a temperature lower than the melting point or decomposition point of the material of the recording layer.

EP 0 240 800 A2

TITLE OF THE INVENTION

OPTICAL RECORDING DISC


BACKGROUND OF THE INVENTION

FILED OF THE INVENTION

The present invention relates to an optical disc for recording and reproducing information by radiating a light beam.


DESCRIPTION OF THE PRIOR ART

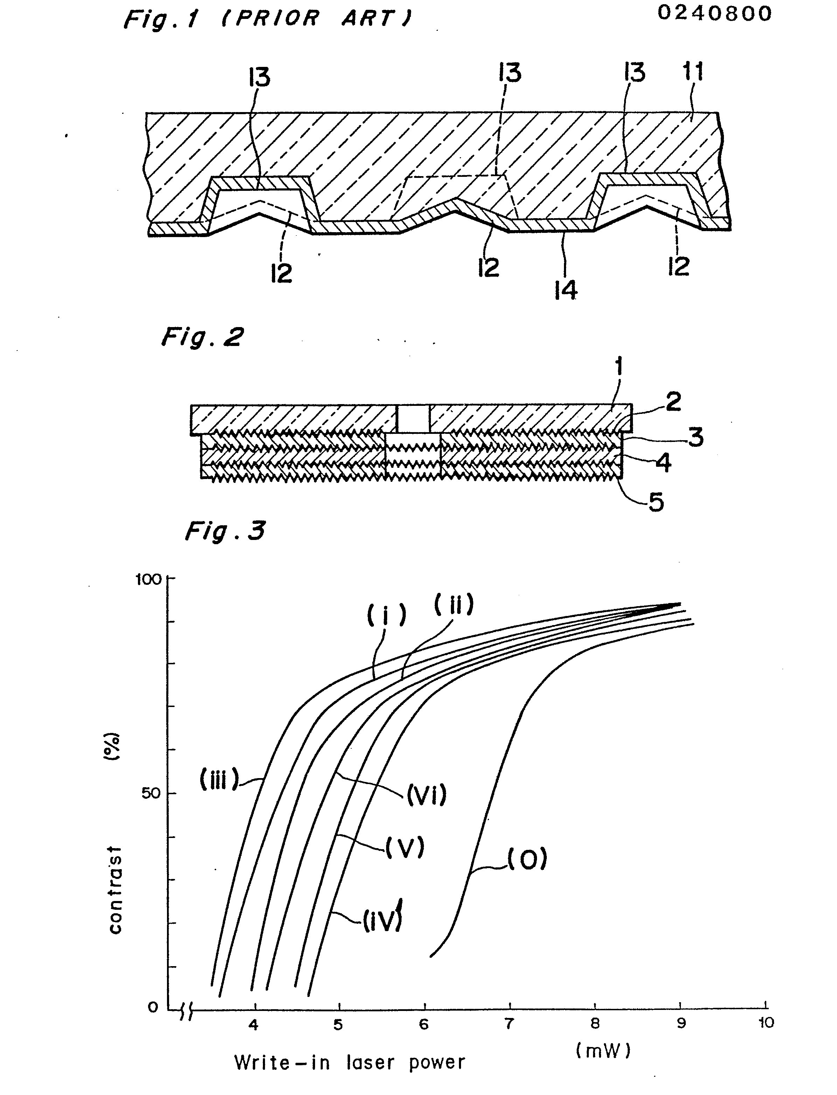

A conventional optical disc is shown in Fig. 1 in which a disc substrate is 11 has its one recording surface formed with pregrooves 12 for recording tracking signals and prepits 13 for recording address signals. Each of the pregrooves 12 and prepits 13 is covered with recording layer 14 made of heat mode recording material. The prepits 13 are respectively formed on the pregrooves 12 so that the signals can be read corresponding to the difference of the depth of the prepits 13 and pregrooves 12.

In order to record information in the optical disc mentioned above, a tracking laser light beam is scanned along the pregrooves 12 and prepits 13 from the disc substrate side and the intensity of light reflected from the recording layer 14 is measured so as to detect the tracking information and address information. Furthermore, recording laser light beam modulated by a predetermined information signal is scanned on predetermined tracks and sectors to cause thermal change such as melt, evaporation and shrinkage of the recording layer 14 to record the information in a bit string of pits. When reading out the information recorded on the optical disc, a reproducing laser light beam is scanned along the pregrooves 12 from the disc substrate side, intensity of light reflected from the recording layer 14 is measured so that the tracking information and address information are detected, thereby to reproduce the recorded information signal.

As the disc substrate material for the optical disc, there have been mainly used polymer material such as PMMA (polymethyl methacrylate), PC (poly carbonate), epoxy resin.

However, as the thermal resistivity of the high polymer material mentioned above is relatively low, repetition of radiation of the laser beam to the optical disc for the reproduction of the information causes the pregroove 12 and the prepit 13 to be gradually deformed. Therefore, there has been recently pointed out of degradation of the contrast of the light reflected from the pregroove 12 and prepit 13, which causes the C/N ratio to be lowered.

Conventionally, in order to record with a high C/N ratio preventing the disturbance of the shape of the prepits and projections of the optical disc near the recording pits by preventing the thermal deformation of the optical disc substrate, there is disclosed in Japanese Patent laid open (unexamined) 57-189356 to provide a adiabatic layer having low thermal conductivity and high adiabatic property in addition to a thermal resistivity higher than the recording temperature such as CuSe or $As_2Se_3$ including more than 40 atomic % of Se, or S between the disc substrate 11 and a recording layer 14.

According to the study by the present inventors, there has been found that superiority and inferiority of an under layer of the recording layer 14 has an important effect to the superiority and inferiority of a recording property and the thermal deformation of the recording layer 14 is promoted by the thermal deformation of the under layer such as disc substrate 11, namely if the under layer is never thermally deformed, the recording sensitivity of the recording layer 14 is remarkably lowered.

In case, for example, a recording layer is formed on the under layer made of glass, the recording sensitivity is remarkably lowered compared to such a case that the recording layer is directly formed on a substrate made of PMMA material.

Accordingly, in case the adiabatic layer which is not thermally deformed is formed between the disc substrate 11 and the recording layer 14 as proposed by the prior art of Japanese patent publication mentioned above, the

0240800

recording sensitivity is much lowered, although the C/N ratio and the thermal deformation of the prepits and the pregrooves can be improved. This means that according to the prior art, it is necessary to increase the recording power.

SUMMARY OF THE INVENTION

In order to increase the recording sensitivity keeping the pattern of the prepits and pregrooves on the disc substrate undeformed under the repetition of the reproducing laser light scanning on the optical disc, it is necessary not only to form a layer on the disc substrate to which the recording information is transferred by a high thermal resistive material so as to prevent the thermal deformation of the prepits and the pregrooves under repetition of the laser light beam scan but also to provide an additional layer which is meltable or solvable at a temperature lower than the melting point of the recording layer on the side to which the laser light beam is radiated.

An essential object of the present invention is to provide an optical disc which is able to record information with a high recording sensitivity and a high C/N ratio.

Another object of the present invention is to provide an optical disc which is able to record and reproduce without change of the C/N ratio under repetition of the laser light beam scan.

According to the present invention, there is provided an optical recording disc comprising;

a disc substrate,

an adiabatic layer formed on one side surface of the disc substrate with light permeable material having a thermal deformation temperature higher than a thermal deformation temperature of the disc substrate,

a triggering layer formed on said adiabatic layer with light permeable material, and

a recording layer formed on said triggering layer,

the material of said triggering layer being meltable or decomposable at a temperature lower than the melting point or decomposition point of the material of the recording layer.

BRIEF EXPLANATION OF THE DRAWINGS

Fig. 1 is a cross sectional view showing an example of a pregrooves and prepits used in a conventional optical disc,

Fig. 2 is a cross sectional view showing a preferred embodiment of an optical disc according to the present invention,

Fig. 3 shows graphs of recording property of various examples of the optical disc according to the present invention and conventional optical disc with the vertical axis taken for contrast ratio and the horizontal axis taken for write-in laser power, wherein the curves (i) to (vi) represent the first to sixth examples of the optical disc according to the present invention and (0) represents the conventional optical disc,

Fig. 4 is a cross sectional view of another embodiment of the optical disc according to the present invention,

Fig. 5 is a cross sectional view of a further embodiment of the optical disc according to the present invention, and

Fig. 6 is a cross sectional view of a still further embodiment of the optical disc according to the present invention.

DETAILED DESCRIPTION OF THE PREFERRED EMBODIMENTS

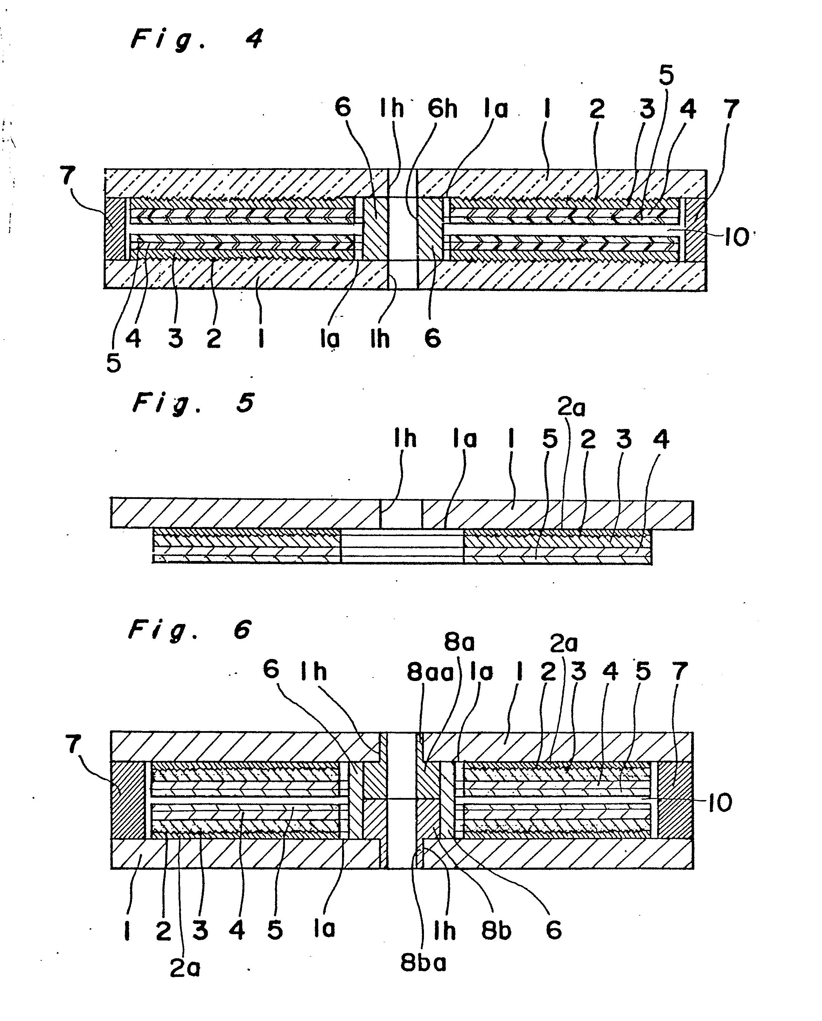

Referring to Fig. 2 showing a general structure of an optical disc according to the present invention, there are shown a disc substrate 1, a replicated pattern 2 formed on the disc substrate 1, a adiabatic layer 3 formed on the disc substrate 1, a triggering layer 4 formed one the adiabatic layer 3 and a recording layer 5 formed on the triggering layer 4.

The disc substrate 1. is made of a plastic resin material such as PMMA, PC, polyvinyl chloride, polypropylen, acrylic resin, epoxy resin or the like and is shaped into a round disc shape of a predetermined diameter with a through hole 1a penetrated at the center position of the disc.
There is transferred the replicated pattern 2 containing the
pregrooves of the tracking information and the prepits of
the address signal on one side of the disc substrate 1.  The
disc substrate 1 may be produced using various ways
depending on the material thereof.  For examples, in case
the disc substrate 1 is made of PMMA or PC, an injection
molding may be used.  In case the disc substrate 1 is made
of epoxy resin, casting may be used.

The recording layer 5 may be made of low melting
metal such as Te or alloy containing Te as a main
composition.  As the production methods of the recording
layer 5, there may be used various known thin film technique
such as vacuum deposition, sputtering, electron beam method
or plasma polyerization method.

The adiabatic layer 3 is made of light permeable
material having a high thermal resistivity superior to the
thermal resistivity of the disc substrate 1 and a low.
thermal conductivity.  In considering noise caused by the
optical system and the S/N ratio of the recording and
reproducing device, it is desired to make the reproducing
laser power to be high, therefore, for example, in case a
semiconductor laser of 20 mW (mili watt) with 830 nm (nano
meters) wave length is used, more than 1 mW (mili watt) of
the recording power is needed at the recording surface.  In
order to prevent, the thermal deformation of the pregrooves and prepits even in case of repetition of the laser beam scanning on the optical disc with such laser power mentioned above, it is necessary to use the adiabatic layer 3 having the thermal resistivity higher than 110°C. In addition, the lower the thermal conductivity of the adiabatic layer 3, the higher the recording sensitivity, so that in order to obtain a practically available recording sensitivity using a 20 mW (mili watts) laser power (less than 9 mW of the laser power on the recording layer surface), the thermal conductivity of the adiabatic layer 3 must be less than 8 Kcal/m.h.°C.

Specifically, in case the disc substrate 1 is made of PMMA or PC or epoxy resin and the recording layer 5 is made of the low melting metal containing Te as the main component, the adiabatic layer 3 may be made of at least one sort of inorganic material selected from a group consisting of ZnS, $ZrO_2$, SiO, $SiO_2$, $TiO_2$, $MgF_2$ or at least one sort of organic material selected from polyimide and polyamideimide. The trigger layer 4 may be made of at least one sort of organic material selected from a group consisting of polytetrafluoroethylene, nitrocellulose, guanine, or plasma polymerization of hydrocarbon, benzene monomar and hexamethyldisilaznemonomar or at least one sort of inorganic material of oxide such as $Sb_2O_5$ or $Ag_2O$ or nitride such as $Fe_2N$, $Cu_3N$ or sulfide such as $TiS_2$ or $WS_3$. As the production method of the adiabatic layer 3, the sputtering is excellent. As the production method of the trigger layer 4, there may be used sputtering, vacuum deposition, spin coat method and plasma polymerization.

Table 1 shows the respective kinds of material available for the production of the disc substrate, recording layer, adiabatic layer and triggering layer with their melting point or decomposition temperature, thermal deformation temperature and thermal conductivity.

0240800

Table 1

| material | melting point decomp. temp. (°C) | deformation temp. (°C) | thermal conductivity (Kcal/mh°C) |
|---|---|---|---|
| Te | 449.8 | | 2.74 |
| PMMA | 110 | ~ 90 | 0.17 |
| PC | 220 | ~ 120 | 0.17 |
| epoxy | ~325 | ~ 130 | 0.15 ~ 1.2 |
| ZnS | >1180 | | 1.89 |
| $ZrO_2$ | 2700 | | 1.54 |
| SiO | >1700 | | 1.29 |
| $SiO_2$ | 2230 | | 1.18 |
| $TiO_2$ | 1640 | | 7.20 |
| $MgF_2$ | 1260 | | |
| polyimide | > 400 | >400 | 0.15 |
| polyamide imide | | 274 ~ 297 | 0.2 ~ 0.3 |
| PTFE | 400 | | 0.28 |
| N.C. | 180 | | |
| guanine | 365 | | |

PTFE means polytetrafluoroethylene.

N.C. means nitro cellulose.

decomp. means decomposition.

EXAMPLES

A number of examples 2 of the optical disc according to the preferred embodiments of the present invention are hereinafter described.

Thirteen examples were prepared using the material for the adiabatic layer and material for the triggering layer as listed in the table 2. In the examples, the disc substrates of the respective examples were made of PC by injection molding. The recording layers of the respective examples were made by sputtered TeSe alloy with 300 Å thickness.

Table 2

| example | adiabatic layer | triggering layer |
|---|---|---|
| 1 | $SiO_2$ | polytetrafluoroethylene |
| 2 | $SiO_2$ | guanine |
| 3 | $SiO_2$ | nitro cellulose |
| 4 | $SiO_2$ | methane plasma polymerized layer |
| 5 | $SiO_2$ | benzene plasma polymerized layer |
| 6 | $SiO_2$ | hexadimethyldisilazane plasma polymerized layer |
| 7 | $SiO_2$ | polytetrafluoroethylene |
| 8 | $ZrO_2$ | polytetrafluoroethylene |
| 9 | ZnS | polytetrafluoroethylene |
| 10 | $TiO_2$ | polytetrafluoroethylene |
| 11 | $MgF_2$ | polytetrafluoroethylene |
| 12 | polyimide | polytetrafluoroethylene |
| 13 | polyamideimide | polytetrafluoroethylene |

Example 1

The adiabatic layer 3 of $SiO_2$ was formed using a sputtering method with 300 Å thick on one side surface of the disc substrate 1 made of PC using an injection molding. The sputtering condition was $2 \times 10^{-3}$ Torr of Argon gas pressure with 200 watts of the discharge power. Subsequently, the triggering layer 4 made of polytetrafluoroethylene was formed on the adiabatic layer 3 using sputtering method with 200 Åthick.  The sputtering

condition was 5 x $10^{-3}$ Torr of Argon gas pressure with 60 watts of the discharge power.  Subsequently, the recording layer 5 made of TeSe alloy was formed on the triggering layer 4 using sputtering.  The sputtering condition was 5 x

$10^{-3}$ Torr of Argon pressure with 40 watts of the discharge power.


Example 2

The adiabatic layer 3 of $SiO_2$ was formed on one side surface of the disc substrate 1 in the same condition as used in the example 1, subsequently the triggering layer 4 of guanine was formed on the $SiO_2$ adiabatic layer 3 using vacuum deposition with about 200 Å thick.  The vacuum

deposition was performed using resistance heating method under 8 x $10^{-6}$ Torr vacuum.  The recording layer was formed

with 300 Å thick in the same condition as that of the example 1.


Example 3

The adiabatic layer 3 of $SiO_2$ was formed on one side surface of the disc substrate 1 in the same condition as used in the example 1, subsequently the triggering layer 4 of nitrocellulose was formed on the $SiO_2$ adiabatic layer 3

using a spin coating method with about 1,000 Å thick.  The

number of rotation of the disc substrate 1 was 900 rpm.  The

0240800

recording layer was formed on the triggering layer 4 with 300 Å thick in the same condition as that of the example 1.

Example 4

The adiabatic layer 3 of $SiO_2$ was formed on one side surface of the disc substrate 1 in the same condition as used in the example 1, subsequently the triggering layer of methane was formed on the $SiO_2$ adiabatic layer 3 using the plasma polymerization with about 200 Å thick. The deposition was performed using methane gas as the discharge gas under 0.2 Torr vacuum with the discharge power of 80 watts. The recording layer 5 was formed on the triggering layer 4 with 300 Å thick in the same condition as that of the example 1.

Example 5

The adiabatic layer 3 of $SiO_2$ was formed on one side surface of the disc substrate 1 in the same condition as used in the example 1, subsequently the triggering layer of benzene was formed on the $SiO_2$ adiabatic layer 3 using the plasma polymerization with about 200 Å thick. The deposition was performed using benzene monomar as the discharge gas under 0.15 Torr vacuum with 100 watts of discharge power. Subsequently the recording layer 5 was formed on the triggering layer 4 with 300 Å thick in the same condition of the example 1.

Example 6

The adiabatic layer 3 of $SiO_2$ was formed on one side surface of the disc substrate 1 in the same condition as used in the example 1, subsequently the triggering layer 4 of hexamethyldisilazane monomar was formed on the $SiO_2$ adiabatic layer 3 using plasma polymerization with about 200 Å thick. The deposition was performed using hexamethyldisilazane monomar as the discharge gas under 0.01 Torr vacuum with 140 watts discharge power. The recording layer was formed on the triggering layer 4 with 300 Å thick in the same condition as that of the example 1.

Example 7

The adiabatic layer 3 of SiO was formed using sputtering method with 300 Å thick on one side surface of the disc substrate 1 of PC made by injection molding. The condition of the sputtering was $2 \times 10^{-2}$ Torr of argon gas pressure with 200 watts of the discharge power. Subsequently, the triggering layer 4 made of polytetrafluoroethylene and the recording layer 5 of TeSe were formed in turn on the adiabatic layer 3 in the same manner as those in the example 1.

Example 8

The adiabatic layer 3 of $ZrO_2$ was formed using

sputtering method with 300 A thick on one side surface of the disc substrate 1 of PC made by injection molding. The condition of the sputtering was $2 \times 10^{-3}$ Torr of argon gas pressure with 200 watts of the discharge power. Subsequently, the triggering layer 4 made of polytetrafluoroethylene and the recording layer 5 of TeSe were formed in turn on the adiabatic layer 3 in the same manner as those in the example 1.

Example 9

The adiabatic layer 3 of ZnS was formed using sputtering method with 300 A thick on one side surface of the disc substrate 1 of PC made by injection molding. The condition of the sputtering was $2 \times 10^{-2}$ Torr of argon gas pressure with 200 watts of the discharge power. Subsequently, the triggering layer 4 made of polytetrafluoroethylene and the recording layer 5 of TeSe were formed in turn on the adiabatic layer 3 in the same manner as those in the example 1.

Example 10

The adiabatic layer 3 of $TiO_2$ was formed using sputtering method with 300 A thick on one side surface of the disc substrate 1 of PC made by injection molding. The condition of the sputtering was $2 \times 10^{-3}$ Torr of argon gas pressure with 300 watts of the discharge power.

Subsequently, the triggering layer 4 of polytetrafluoroethylene and the recording layer 5 of TeSe were formed in turn on the adiabatic layer 3 in the same manner as those in the example 1.


Example 11

The adiabatic 3 of $MgF_2$ was formed using sputtering method with 300 Å thick on one side surface of the disc substrate 1 of PC made by injection molding. The condition of the sputtering was $5 \times 10^{-3}$ Torr of argon gas pressure with 150 watts of the discharge power. Subsequently, the triggering layer 4 of polytetrafluoroethylene and the recording layer 5 of TeSe were formed in turn on the adiabatic layer 3 in the same manner as those in the example 1.


Example 12

The adiabatic layer 3 of polyimide was formed using sputtering method with 300 Å thick on one side surface of the disc substrate 1 of PC made by injection molding. The condition of the sputtering was $5 \times 10^{-3}$ Torr of argon gas pressure with 140 watts of the discharge power. Subsequently, the triggering layer 4 made of polytetrafluoroethylene and the recording layer 5 of TeSe were formed on the adiabatic layer 3 in the same manner as those in the example 1.

Example 13

The adiabatic layer 3 of polyamideimide was formed using sputtering method with 300 Å thick on one side surface of the disc substrate 1 of PC made by injection molding. The condition of the sputtering was $5 \times 10^{-3}$ Torr of argon gas pressure with 130 watts of the discharge power. Subsequently, the triggering layer 4 of polytetrafluoroethylene and the recording layer 5 of TeSe were formed in turn on the adiabatic layer 3 in the same manner as those in the example 1.

There are shown in the table 3 the maximum laser powers of the examples 1 to 13 of the optical disc mentioned above under such a condition that the fluctuation of the output signal amplitude from the prepits on the optical disc is less than ± 10% in case of continuous reproduction for 10 hours. Comparison is made with the conventional optical disc which is not provided with the adiabatic layer 3. The tests were made with the wave length of the reproducing leaser light beam of 830 nm (nano meters).

Table 3

| examples | maximum laser power (mW) |
|---|---|
| 1 | 1.5 |
| 2 | 1.7 |
| 3 | 1.7 |
| 4 | 1.8 |
| 5 | 1.7 |
| 6 | 1.5 |
| 7 | 1.5 |
| 8 | 1.5 |
| 9 | 1.5 |
| 10 | 1.7 |
| 11 | 1.5 |
| 12 | 1.3 |
| 13 | 1.2 |

As shown in the table 3, the optical discs in the respective examples have the laser output power more than 1.0 mW under such a condition that the fluctuation of the output signal amplitude is within ± 10% for 10 hours continuous reproduction, therefore, it can be appreciated that the optical disc according to the present invention is available to reproduce with more than 1.0 mW which is needed in actual use for the reproduction with the good C/N ratio.

In the various combinations of the adiabatic layer and the triggering layer in the examples mentioned above, the combination of the $SiO_2$ adiabatic layer and triggering layer made of methane plasma polymerization (example 4) is most superior in terms of the thermal resistivity. The respective combinations of $SiO_2$ adiabatic layer and guanine triggering layer (example 2), $SiO_2$ adiabatic layer and nitrocellulose triggering layer (example 3) and $TiO_2$ adiabatic layer and polytetrafluoroethylene triggering layer (example 10) are superior in terms of the thermal resistivity.

Comparison between the contrast ratio of the examples 1 to 6 and that of the conventional optical disc without the adiabatic layer 3 and triggering layer 4 is shown in Fig. 3. The wave length of the recording laser beam was 830 nano meters and the optical disc was rotated 1200 rpm. In the graphs shown in Fig. 3, the horizontal axis represents the recording laser power on the optical disc and the vertical axis represents the contrast ratio. The wording of the contrast ratio means the easiness of formation of the pit and is represented by $(A-X)/(A-B)$, wherein A is a reflection factor of the laser light at a point where the pit is not formed and B is reflection factor of the laser light at a point where the recording layer is not formed and X is a reflection factor of the laser light of the pit formed by the radiation of the laser light.

As apparent from the graphs shown in Fig. 3, the optical disc according to the present invention having the adiabatic layer 3 and triggering layer 4 attains a large contrast ratio for a predetermined laser power, whereby the pits can easily be formed compared to the conventional optical disc without the adiabatic layer 3 and the triggering layer 4. The optical disc of the example 3 having $SiO_2$ adiabatic layer 3 and nitorcellulose triggering layer 4 attains the highest contrast ratio for a predetermined laser power. Also, it can be found that the pits can be easily formed in the order of the combination of $SiO_2$ adiabatic layer 3 and polytetrafluoroethylene triggering layer 4 (example 1), combination of $SiO_2$ adiabatic layer 3 and guanine triggering layer 4 (example 2), combination of $SiO_2$ adiabatic layer 3 and hexamethyldisilazanepolymer triggering layer 4 (example 6), combination of $SiO_2$ adiabatic layer 3 and benzene polymer triggering layer 4 (example 5) and the combination of the $SiO_2$ adiabatic layer 3 and methane plasma polymerization triggering layer (example 4).

The essential structure of the optical disc according to the present invention is to provide the adiabatic layer 3 with a high thermal resistivity material having a thermal deformation temperature higher than the thermal deformation temperature of the disc substrate 1 on the side of the disc substrate where the prepits and the pregrooves are formed and to provide the triggering layer 4 with a light permeable material having a melting or solving point lower than that of the recording layer 5 on the side where the prepits and the pregrooves are formed, therefore, the material used in the adiabatic layer and triggering layer is not limited to the examples mentioned above and may be selected as desired.

Although the present invention is explained with respect to the various examples of single sided optical disc mentioned above, the present invention can be applied to various types of the optical disc, for examples, such as dual sided optical disc as shown in Fig. 4 and Fig. 6 in which like parts shown in Fig. 2 are designated by like reference numerals.

Fig. 4 shows dual sided optical disc in which a pair of single sided optical disc made by assembling the arrangement shown in Fig. 2 are bonded together through an inner spacer 6 and an outer spacer 7 so that the recording layers 5 face each other forming an air gap 10. The inner spacer 6 is bonded on the inner rim portion of the disc substrate 1, and a center hole 6h having the same inner diameter as the inner diameter of the center hole 1h is formed in the center portion of the inner spacer 6.

The disc substrate 1 is made of transparent material such as glass or the like.

Fig. 5 shows a further example of the optical disc according to the present invention in which a replica layer 2a made of ultraviolet lay hardening material is formed between the disc substrate 1 and the adiabatic layer 3.

Fig. 6 shows a further example of the optical disc according to the present invention in which a pair of the arrangements shown in Fig. 5 are assembled to form a dual sided optical disc. In the inner spacer 6, a pair of hub halves 8a and 8b are engaged in the inner spacer 6 with respective stepped cylindrical portion 8aa and 8ba fitted in the center hole 1h of the respective disc substrate 1.

WHAT IS CLAIMED IS

1.      An optical recording disc comprising;

        a disc substrate,

        an adiabatic layer formed on one side surface of
the disc substrate with light permeable material having a
thermal deformation temperature higher than a thermal
deformation temperature of the disc substrate,

        a triggering layer formed on said adiabatic layer
with light permeable material, and

        a recording layer formed on said triggering layer,

        the material of said triggering layer being
meltable or decomposable at a temperature lower than the
melting point or decomposition point of the material of the
recording layer.

2.      The optical recording disc according to claim 1,
wherein said adiabatic layer is made of material having a
thermal resistivity higher than 110°C and a thermal
conductivity lower than 8 kcal/m h °C.

3.      The optical recording disc according to claim 1,
wherein said disc substrate is made of PMMA, PC or epoxy
resin and the adiabatic layer is made of at least one sort
of inorganic material selected from the group consisting of
ZnS, ZrO$_2$, SiO, SiO$_2$ TiO$_2$ and MgF$_2$, or organic material
selected from polyimide and polyamidoxinide.

4.      The optical recording disc according to claim 1,
wherein said recording disc is made of Te or a low melting point metal mainly containing Te and said triggering layer is made of nitrocellulose.

5.    The optical recording disc according to claim 1, wherein said recording disc is made of Te or a low melting point metal mainly containing Te and said triggering layer is made of polytetrafluoroethylene.

6.    The optical recording disc according to claim 1, wherein said recording disc is made of Te or a low melting point metal mainly containing Te and said triggering layer is made of guanine.

7.    The optical recording disc according to claim 1, wherein said recording disc is made of Te or a low melting point metal mainly containing Te and said triggering layer is made of plasma polymerized material having hydrocarbon, benzenemonomar, hexamethyldisilazanemonomar as a vapor source.

8.    The optical recording disc according to claim 1, wherein said recording disc is made of Te or a low melting point metal mainly containing Te and said triggering layer is made of at least one sort of inorganic material selected from a group consisting of $Sb_2O_5$, $Ag_2O$, $Fe_2N$, $Cu_3N$, $TiS_2$, and $WS_3$.

9.    A method of the production of an optical recording disc defined in claim 1 comprising;

a step of producing the adiabatic layer by sputtering,

0240800

a step of producing the triggering layer by plasma polymerization and

a step of producing the recording layer by sputtering, the respective steps being performed in the order consecutively.

10.     A method of the production of an optical recording disc defined in claim 1, characterized in that the adiabatic layer, the triggering layer and the recording layer are respectively formed by sputtering consecutively in the order.

1/2  FI 19-09-8

0240800

Fig.1 (PRIOR ART)

Fig.2

Fig.3

contrast (%)

Write-in laser power (mW)

0240800

## Fig. 4

## Fig. 5

## Fig. 6